# EUROPÄISCHE PATENTSCHRIFT

(11) **EP 1 122 476 B1**
(45) Veröffentlichungstag und Bekanntmachung des Hinweises auf die Patenterteilung: **27.10.2004**
(21) Anmeldenummer: 01101037.8
(22) Anmeldetag: 18.01.2001
(51) Int. Cl.: F16K 31/46

(54) **Frostsichere Regulier- und Absperrarmatur**
Freeze resistant control and shut-off valve
Soupape de réglage et d'arrêt insensible au gel

(30) Priorität: 03.02.2000 DE 20001883 U
(43) Veröffentlichungstag der Anmeldung: 08.08.2001
(73) Patentinhaber: Gebr. Kemper GmbH + Co. KG, 57462 Olpe (DE)
(72) Erfinder: Keine, Ulrich, 57439 Attendorn (DE)
(74) Vertreter: Pürckhauer, Rolf, Dipl.-Ing.

(56) Entgegenhaltungen:
- EP-A- 0 940 613
- DE-C- 81 866
- DE-U- 29 820 782
- US-A- 4 316 481
- US-A- 5 029 603

## Beschreibung

Die Erfindung betrifft eine frostsichere Regulier- und Absperrarmatur, insbesondere für Wasserzapfstellen im Außenbereich, die als Geradsitzventil ausgebildet ist, mit einem für den Innenbereich eines Gebäudes vorgesehenen Ventilgehäuse, in dem ein Ventilkegel zum Öffnen und Schließen der Durchgangsöffnung eines Ventilsitzes mittels einer Zwischenspindel in Richtung der Spindelachse verstellbar geführt ist, einem für den Außenbereich des Gebäudes vorgesehenen Auslaufgehäuse, in das ein Ventiloberteil mit einer in diesem drehbar angeordneten Stellspindel mit Drehgriff eingesetzt ist, die mit einer in dem Ventiloberteil axial verstellbaren, mit der Zwischenspindel gekuppelten Verbindungsmuffe zusammenwirkt, sowie mit einem zwischen Ventilgehäuse und Auslaufgehäuse angeordneten Zwischenrohr.

Bei derartigen, aus der DE 198 19 033 A1 bekannten Regulierund Absperrarmaturen treten im Betrieb unerwünschte Geräusche auf, deren Ursache darin liegt, daß bei der Drosselung einer Flüssigkeitsströmung in der Armatur Druckenergie in andere Energieformen wie kinetische Energie, Wärmeenergie und Schallenergie umgesetzt wird. Der Umsetzungsgrad, der für die Höhe der Schalleistung maßgebend ist, hängt im wesentlichen vom Armaturentyp und vom Druckverhältnis ab. Die Geräusche entstehen durch Druckschwankungen, Druckschwingungen, unterschiedliche Strömungsgeschwindigkeiten, Wirbelbildungen und Verdichtungsstöße. Diese Strömungserscheinungen wirken sich bei der gattungsgemäßen Regulier- und Absperrarmatur mit einer verhältnismäßig langen Zwischenspindel zur Verbindung des Ventilkegels mit der durch einen Drehgriff zu betätigenden Stellspindel besonders nachteilig auf die Geräuschentwicklung aus, die durch die Schwingungen der Zwischenspindel aufgrund der Druckschwankungen, der Druckschwingungen und der unterschiedlichen Geschwindigkeiten einer Flüssigkeitsströmung durch eine Armatur verstärkt wird.

Bei der Regulier- und Absperrarmatur gemäß der DE 198 19 033 A1 ist die Zwischenspindel zur Verhinderung von Schwingungen durch eine Stütze mit Federelementen im Ventilgehäuse geführt. Mit dieser konstruktiven Maßnahme wird die angestrebte Schwingungsdämpfung der Zwischenspindel nicht erreicht.

Der Erfindung liegt die Aufgabe zugrunde, die gattungsgemäße Regulier- und Absperreinheit im Hinblick auf minimale Betriebsgeräusche weiterzuentwickeln.

Diese Aufgabe ist erfindungsgemäß gelöst durch eine Regulier- und Absperrarmatur mit den Merkmalen des Schutzanspruchs 1.

Die Unteransprüche beinhalten vorteilhafte und zweckmäßige Weiterbildungen der Erfindung.

Durch die erfindungsgemäße Führung und schwingungsdämpfende Lagerung des Ventilkegels und der an diesem befestigten Zwischenspindel in dem Ventilgehäuse der Regulier- und Absperrarmatur mittels zweier als O-Ringe ausgebildeter Gleitringe, die in Ringnuten im Außenmantel des Ventilkegels eingelegt sind, sowie an der zylindrischen Innenwand des Ventilgehäuses angeordneter Führungsnocken für den in Richtung der Achse der Zwischenspindel und der Stellspindel verstellbaren Ventilkegel werden die Betriebsgeräusche der Armatur auf einen minimalen Geräuschpegel herabgesetzt.

Die Erfindung ist nachstehend anhand von Zeichnungsfiguren erläutert, die folgendes darstellen:

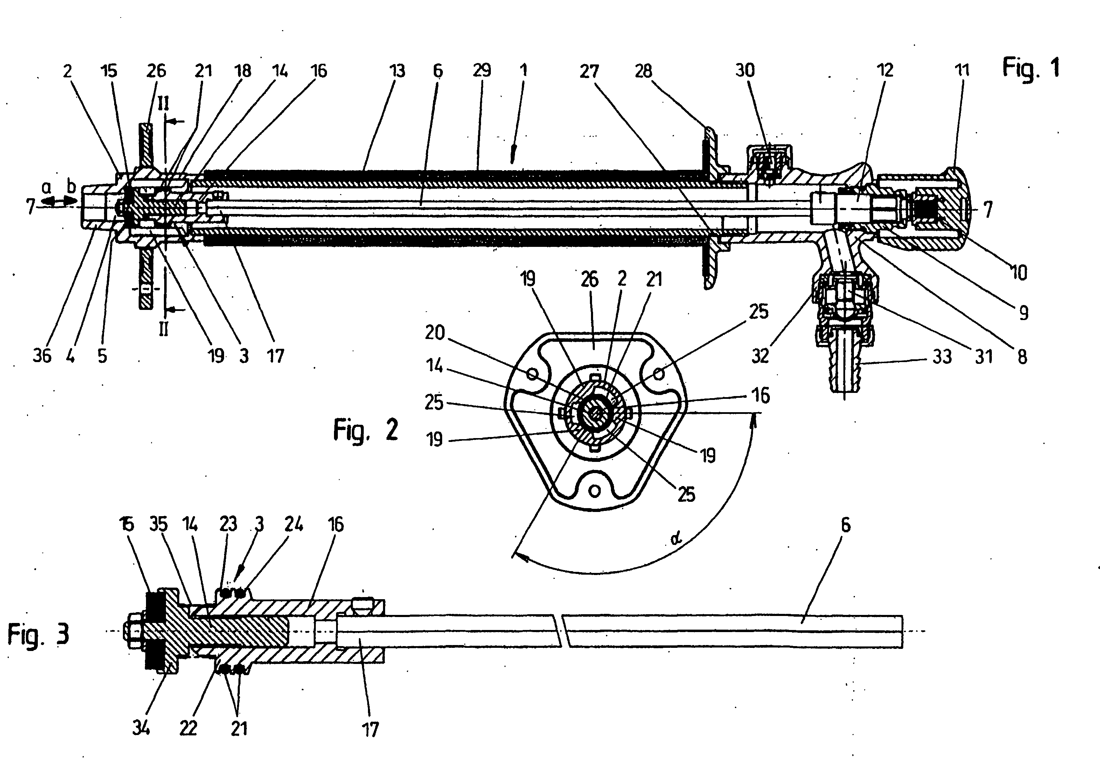

- Fig. 1: einen Längsschnitt der neuen Regulier- und Absperrarmatur,
- Fig. 2: einen Querschnitt durch das Ventilgehäuse der Armatur nach Linie II-II der Fig. 1 und
- Fig. 3: einen Längsschnitt des Ventilkegels in vergrößerter Darstellung.

Hauptbauteile der frostsicheren, insbesondere bei Wasserzapfstellen im Außenbereich verwendeten Regulier- und Absperrarmatur 1, die als Geradsitzventil ausgebildet ist, sind ein für den Innenbereich eines Gebäudes vorgesehenes Ventilgehäuse 2, in dem ein Ventilkegel 3 zum Öffnen und Schließen der Durchgangsöffnung 4 eines Ventilsitzes 5 mittels einer Zwischenspindel 6 in Richtung der Spindelachse 7 - 7 in Pfeilrichtung a, b verstellbar geführt ist, ein für den Außenbereich des Gebäudes vorgesehenes Auslaufgehäuse 8, in das ein Ventiloberteil 9 mit einer in diesem drehbar angeordneten, axial unbeweglichen Stellspindel 10 mit Drehgriff 11 eingesetzt ist, die mit einem Gewindeabschnitt in einer Gewindebohrung einer in dem Ventiloberteil 9 axial verstellbaren, mit der Zwischenspindel 6 gekuppelten Verbindungsmuffe 12 sitzt, sowie ein zwischen Ventilgehäuse 2 und Auslaufgehäuse 8 angeordnetes Zwischenrohr 13.

Der Ventilkegel 3 der als Rückschlagventil ausgebildeten Armatur 1 weist einen Einsatzkegel 14 mit einer Dichtscheibe 15 zum Verschließen der Durchgangsöffnung 4 des Ventilsitzes 5 im Ventilgehäuse 2 und eine Verbindungshülse 16 für den Einsatzkegel 14 und das ventilseitige Ende 17 der Zwischenspindel 6 auf. Zwischen dem Teller 34 des Einsatzkegels 14, der in der Verbindungshülse 16 in Richtung der Spindelachse 7-7 verschiebbar gelagert ist, und einer Ringschulter 22 der Verbindungshülse 16 ist eine Ventilfeder 35 angeordnet. Beim Öffnen der Armatur 1 wird die Verbindungshülse 16 mittels der Zwischenspindel 6 in Pfeilrichtung b verstellt, so daß der Einsatzkegel 14 des Ventilkegels 3 durch den Wasserdruck im Einlaufstutzen 36 des Ventilgehäuses 2 gegen den Druck der Ventilfeder 35 vom Ventilsitz 5 abgehoben und die Durchgangsöffnung 4 desselben geöffnet wird. Steigt der Wasserdruck im Auslaufgehäuse 8 der Armatur 1 über den Wasserdruck im Einlaufstutzen 36 z. B. aufgrund eines Wasserleitungsschadens im Gebäude an, schließt der Einsatzkegel 14 des Ventilkegels 3 die Durchgangsöffnung 4 des Ventilsitzes 5 automatisch mit Unterstützung der Ventilfeder 35, so daß kein Wasser in die schadhafte Wasserleitung im Gebäude zurücklaufen kann.

An der zylindrischen Innenwand 18 des Ventilgehäuses 2 sind drei jeweils mit einem Winkel α von 120° gegeneinander verdrehte, parallel zur gemeinsamen Achse 7-7 von Zwischenspindel 6 und Stellspindel 10 gerichtete Führungsnocken 19 mit einer teilzylindrischen Führung 20 für den mit zwei Gleitringen 21, 21 ausgestatteten Ventilkegel 3 angeformt. Die als O-Ringe ausgebildeten Gleitringe 21 bilden zusammen mit den Führungsnocken 19 eine schwingungsdämpfende Lagerung für den Ventilkegel 3 und die an diesem befestigte Zwischenspindel 6 im Ventilgehäuse 2.

Die Ringschulter 22 der Verbindungshülse 16 des Ventilkegels 3 weist zwei axial beabstandete Ringnuten 23, 24 zur Aufnahme der beiden Gleitringe 21, 21 des Ventilkegels 3 auf.

Zwischen den an der Innenwand 18 des Ventilgehäuses 2 angeformten Führungsnocken 19 und der Ringschulter 22 der Verbindungshülse 16 des Ventilkegels 3 sind Durchflußöffnungen 25 für das Leitungswasser gebildet.

Um die Armatur 1 gegen Verdrehen zu sichern, ist auf das Ventilgehäuse 2 ein Befestigungsflansch 26 formschlüssig aufsteckbar, der je nach Material der mit einer Durchstecköffnung für das Zwischenrohr 13 der Armatur 1 ausgestatteten Gebäudewand mit Nägeln oder Schrauben an der Innenseite der Gebäudewand befestigt werden kann. Ein auf das äußere Ende 27 des Zwischenrohres 13 aufgeschraubter, hinter dem Auslaufgehäuse 8 sitzender zusätzlicher Befestigungsflansch 28 dient zur Zentrierung und radialen Fixierung des Zwischenrohres 13 in der Durchstecköffnung der Gebäudewand und wird mit Nägeln oder Schrauben an der Außenseite der Gebäudewand befestigt.

Das Zwischenrohr 13 der Armatur 1 wird mit einem aufgeschobenen Isolierschlauch 29 aus Schaumstoff in der Durchstecköffnung der Gebäudewand isoliert.

Die Regulier- und Absperrarmatur 1 muß vor Einbruch der kalten Jahreszeit nicht entleert werden, da sich Wasser lediglich am Ventilkegel 3 des Ventilgehäuses 2 im Innenbereich eines Gebäudes ansammelt und die im Außenbereich des Gebäudes befindlichen Teile der Armatur 1 durch einen Belüfter 30 im Auslaufgehäuse 8 und einen weiteren Belüfter 31 in der in den Auslaufstutzen 32 des Auslaufgehäuses 8 der Armatur 1 eingeschraubten Schlauchverschraubung 33 automatisch entleert werden.

### Bezugszeichen

- 1: Regulier- und Absperrarmatur
- 2: Ventilgehäuse
- 3: Ventilkegel
- 4: Durchgangsöffnung von 5
- 5: Ventilsitz
- 6: Zwischenspindel
- 7-7: Spindelachse von 6 u. 10
- 8: Auslaufgehäuse
- 9: Ventiloberteil
- 10: Stellspindel
- 11: Drehgriff von 10
- 12: Verbindungsmuffe von 6 u. 10
- 13: Zwischenrohr zwischen 2 u. 8
- 14: Einsatzkegel von 3
- 15: Dichtscheibe an 14
- 16: Verbindungshülse für 14 u. 17
- 17: ventilseitiges Ende von 6
- 18: zylindrische Innenwand von 2
- 19: Führungsnocken an 18
- 20: teilzylindrische Führung von 19
- 21: Gleitring von 3
- 22: Ringschulter von 16
- 23: Ringnut in 22
- 24: Ringnut in 22
- 25: Durchflußöffnung zwischen 19 u. 22
- 26: Befestigungsflansch auf 2
- 27: äußeres Ende von 13
- 28: Befestigungsflansch auf 27
- 29: Isolierschlauch auf 13
- 30: Belüfter in 8
- 31: Belüfter in 33
- 32: Auslaufstutzen von 8
- 33: Schlauchverschraubung

- a, b: Verstellrichtung von 3
- α: Verdrehwinkel von 19

## Patentansprüche

1. Frostsichere Regulier- und Absperrarmatur, insbesondere für Wasserzapfstellen im Außenbereich, die als Geradsitzventil ausgebildet ist, mit einem für den Innenbereich eines Gebäudes vorgesehenen Ventilgehäuse (2), in dem ein Ventilkegel (3) zum Öffnen und Schließen der Durchgangsöffnung (4) eines Ventilsitzes (5) mittels einer Zwischenspindel (6) in Richtung der Spindelachse verstellbar geführt ist, einem für den Außenbereich des Gebäudes vorgesehenen Auslaufgehäuse (8), in das ein Ventiloberteil (9) mit einer in diesem drehbar angeordneten Stellspindel (10) mit Drehgriff (11) eingesetzt ist, die mit einer in dem Ventiloberteil (9) axial verstellbaren, mit der Zwischenspindel (6) gekuppelten Verbindungsmuffe (12) zusammenwirkt, sowie mit einem zwischen Ventilgehäuse (2) und Auslaufgehäuse (8) angeordneten Zwischenrohr (13), **gekennzeichnet durch** an der zylindrischen Innenwand (18) des Ventilgehäuses (2) angeordnete, parallel zur gemeinsamen Achse (7-7) von Zwischenspindel (6) und Stellspindel (10) gerichtete Führungsnocken (19) für den mit Gleitringen (21) ausgestatteten Ventilkegel (3), wobei die als O-Ringe ausgebildeten Gleitringe (21) zusammen mit den Führungsnocken (19) eine schwingungsdämpfende Lagerung für den Ventilkegel (3) und die an diesem befestigte Zwischenspindel (6) im Ventilgehäuse (2) bilden.

2. Armatur nach Anspruch 1, **gekennzeichnet durch** zwei mit axialem Abstand in entsprechende Ringnuten (23, 24) in dem zylindrischen Außenmantel des Ventilkegels (3) eingelegte Gleitringe (21).

3. Armatur nach Anspruch 2, **dadurch gekennzeichnet, daß** die Ringnuten (23, 24) zur Aufnahme der Gleitringe (21) in einer Ringschulter (22) des Ventilkegels (3) angeordnet sind.

4. Armatur nach einem der Ansprüche 1 bis 3, **dadurch gekennzeichnet, daß** der Ventilkegel (3) einen Einsatzkegel (14) mit einer Dichtscheibe (15) zum Verschließen der Durchgangsöffnung (4) des Ventilsitzes (5) im Ventilgehäuse (2) und eine Verbindungshülse (16) für den Einsatzkegel (14) und das ventilseitige Ende (17) der Zwischenspindel (6) aufweist und daß die Ringnuten (23, 24) zum Einlegen der Gleitringe (21) in einer Ringschulter (22) der Verbindungshülse (16) des Ventilkegels (3) angeordnet sind.

5. Armatur nach einem der Ansprüche 1 bis 4, **gekennzeichnet durch** drei an der Innenwand (18) des Ventilgehäuses (2) angeformte, um einen Winkel (α) von 120° gegeneinander verdreht angeordnete Führungsnocken (19) mit einer teilzylindrischen Führung (20) für den Ventilkegel (3).

6. Armatur nach einem der Ansprüche 1 bis 5, **gekennzeichnet durch** einen auf das Ventilgehäuse (2) der Armatur (1) formschlüssig aufsteckbaren Befestigungsflansch (26) zum Befestigen des Ventilgehäuses (2) an der Innenseite einer mit einer Durchstecköffnung für das Zwischenrohr (13) der Armatur (1) ausgestatteten Gebäudewand.

7. Armatur nach Anspruch 6, **gekennzeichnet durch** einen auf das äußere Ende (27) des Zwischenrohres (13) aufschraubbaren, hinter dem Auslaufgehäuse (8) sitzenden zusätzlichen Befestigungsflansch (28) zur Zentrierung und radialen Fixierung des Zwischenrohres (13) in der Durchstecköffnung einer Gebäudewand und zur Befestigung der Armatur (1) an der Außenseite der Gebäudewand.

8. Armatur nach Anspruch 6 und 7, **dadurch gekennzeichnet, daß** zum Befestigen der Befestigungsflansche (26, 28) an der Innenseite bzw. Außenseite einer Gebäudewand je nach Wandmaterial Nägel oder Schrauben vorgesehen sind.

## Claims

1. Freeze-resistant control and shut-off valve, especially for water discharge points in the outdoor region, the valve being a straigt seat valve, having a valve housing (2) provided for the indoor region of a building, in which valve housing there is adjustably guided a valve cone (3) for opening and closing the passage (4) of a valve seat (5) by means of an intermediate screw (6) in the direction of the screw axis, an outlet housing (8) provided for the outdoor region of the building, in which housing is inserted a valve upper part (9) with an adjusting spindle (10) with control grip (11) rotatably arranged therein, the spindle cooperating with a connecting sleeve (12) coupled with the intermediate screw (6) and being axially adjustable within the valve upper part (9), and an intermediate pipe (13) arranged between the valve housing (2) and the outlet housing (8), **characterized by** guide cams (19), arranged at the cylindrical inner wall (18) of the valve housing (2) parallel with the common axis (7-7) of the intermediate screw (6) and the adjusting spindle (10), for the valve cone (3) provided with slide rings (21), wherein the slide rings (21) in the form of O-rings together with the guide cams (19) form a shock absorbing bearing in the valve housing (2) for the valve cone (3) and the intermediate spindle (6).

2. Valve as claimed in claim 1, **characterized by** two slide rings (21) inserted with axial distance in corresponding annular grooves (23, 24) in the cylindrical outer sheathing of the valve cone (3).

3. Valve as claimed in claim 2, **characterized in that** the annular grooves (23, 24) for receiving the slide rings (21) are provided in a ring shoulder (22) of the valve cone (3).

4. Valve according to any of claims 1 to 3, **characterized in that** the valve cone (3) comprises an insert cone (14) with a sealing disc (15) for closing the passage (4) of the valve seat (5) in the valve housing (2) and a connecting sleeve (16) for the insert cone (14) and the valve-side end (17) of the intermediate screw (6), and **in that** the annular grooves (23, 24) for inserting the slide rings (21) are provided in a ring shoulder (22) of the connecting sleeve (16) of the valve cone (3).

5. Valve according to anyone of claims 1 to 4, **characterized by** three guide cams (19) having a partial cylindrical guide (20) for the valve cone (3), being formed at the inner wall (18) of the valve housing (2) and spaced apart by an angle (α) of 120°.

6. Valve according to anyone of claims 1 to 5, **characterized by** on the valve housing (2) of the valve (1) form-lockingly attachable fixing flange (26) for fastening the valve housing (2) at the inside of a building wall provided with a piercing aperture for the intermediate pipe (13) of a valve (1).

7. Valve as claimed in claim 6, **characterized by** an additional fixing flange (28) for centering and radially fixing the intermediate pipe (13) in the piercing aperture of a building wall and for fixing the valve (1) at the outside of the building wall, the additional fixing flange being screwable on the outer end (27) of the intermediate pipe (13) and sitting behind the outlet housing (8).

8. Valve according to claims 6 und 7, **characterized in that** for fastening the fixing flanges (26, 28) at the inside and outside, respectively, of the building wall nails or screws are provided dependet on the wall material.

## Revendications

1. Robinetterie de réglage et d'arrêt insensible au gel, notamment pour des prises d'eau à l'extérieur de bâtiments, qui est réalisée sous forme de soupape à siège droit, comportant un boîtier (2) de soupape prévu pour l'intérieur d'un bâtiment, boîtier dans lequel un cône (3) de soupape est, au moyen d'une tige (6) intermédiaire, guidé en déplacement dans la direction de l'axe de la tige afin d'ouvrir et de fermer l'ouverture (4) de passage d'un siège (5) de soupape, comportant un boîtier (8) de sortie prévu pour l'extérieur du bâtiment, boîtier dans lequel est installée une partie (9) supérieure de soupape dotée d'une tige (10) de réglage disposée à rotation dans ladite partie et munie d'une poignée (11) tournante, tige qui coopère avec un manchon (12) de liaison pouvant être déplacé axialement dans la partie (9) supérieure de soupape et accouplé à la tige (6) intermédiaire, et comportant un conduit (13) intermédiaire disposé entre le boîtier (2) de soupape et le boîtier (8) de sortie, **caractérisée par** des ergots (19) de guidage disposés sur la paroi (18) intérieure cylindrique du boîtier (2) de soupape en étant orientés parallèlement à l'axe (7-7) commun de la tige (6) intermédiaire et de la tige (10) de réglage, pour le guidage du cône (3) de soupape équipé d'anneaux (21) de glissement, les anneaux (21) de glissement réalisés sous la forme d'anneaux toriques formant dans le boîtier (2) de soupape, conjointement avec les ergots (19) de guidage, un palier amortissant les vibrations pour le cône (3) de soupape et la tige (6) intermédiaire fixée à ce dernier.

2. Robinetterie suivant la revendication 1, **caractérisée par** deux anneaux (21) de glissement logés à distance axiale dans des rainures (23, 24) annulaires correspondantes dans l'enveloppe extérieure cylindrique du cône (3) de soupape.

3. Robinetterie suivant la revendication 2, **caractérisée en ce que** les rainures (23, 24) annulaires destinées à recevoir les anneaux (21) de glissement sont disposées dans un épaulement (22) annulaire du cône (3) de soupape.

4. Robinetterie suivant l'une des revendications 1 à 3, **caractérisée en ce que** le cône (3) de soupape comporte un cône (14) d'insertion pourvu d'une rondelle (15) d'étanchéité pour obturer l'ouverture (4) de passage du siège (5) de soupape dans le boîtier (2) de soupape, et une douille (16) de liaison pour le cône (14) d'insertion et l'extrémité (17) côté soupape de la tige (6) intermédiaire, et **en ce que** les rainures (23, 24) annulaires pour loger les anneaux (21) de glissement sont disposées dans un épaulement (22) annulaire de la douille (16) de liaison du cône (3) de soupape.

5. Robinetterie suivant l'une des revendications 1 à 4, **caractérisée par** trois ergots (19) de guidage formés sur la paroi (18) intérieure du boîtier (2) de soupape et disposés en étant tournés les uns par rapport aux autres d'un angle (α) de 120°, qui sont pourvus d'un guidage (20) partiellement cylindrique pour le cône (3) de soupape.

6. Robinetterie suivant l'une des revendications 1 à 5, **caractérisée par** une bride (26) de fixation pouvant être enfilée à complémentarité de forme sur le boîtier (2) de soupape de la robinetterie (1) pour fixer le boîtier (2) de soupape sur la face intérieure d'un mur de bâtiment équipé d'une ouverture traversante pour le conduit (13) intermédiaire de la robinetterie (1 ).

7. Robinetterie suivant la revendication 6, **caractérisée par** une bride (28) de fixation supplémentaire, montée derrière le boîtier (8) de sortie et pouvant être vissée sur l'extrémité (27) extérieure du conduit (13) intermédiaire, pour le centrage et l'immobilisation radiale du conduit (13) intermédiaire dans l'ouverture traversante d'un mur de bâtiment et pour la fixation de la robinetterie (1) sur la face extérieure du mur de bâtiment.

8. Robinetterie suivant les revendications 6 et 7, **caractérisée en ce que**, suivant le matériau du mur, des clous ou des vis sont prévus pour la fixation des brides (26, 28) de fixation respectivement sur la face intérieure et sur la face extérieure d'un mur de bâtiment.
